# EUROPÄISCHE PATENTSCHRIFT

(11) **EP 3 104 037 B1**
(45) Veröffentlichungstag und Bekanntmachung des Hinweises auf die Patenterteilung: **06.02.2019**
(21) Anmeldenummer: 16170532.2
(22) Anmeldetag: 20.05.2016
(51) Int. Cl.: F16F 9/16, B61G 5/02

(54) **ZUG-/STOSSEINRICHTUNG, INSBESONDERE FÜR MITTELPUFFERKUPPLUNGEN VON SPURGEFÜHRTEN FAHRZEUGEN**
TRACTION/IMPACT DEVICE, IN PARTICULAR FOR CENTRAL BUFFER COUPLINGS OF TRACK-GUIDED VEHICLES
DISPOSITIF DE TRACTION/POUSSEE, EN PARTICULIER POUR DES ATTELAGES À TAMPON CENTRAL DE VÉHICULES SUR RAILS

(30) Priorität: 12.06.2015 DE 102015109394
(43) Veröffentlichungstag der Anmeldung: 14.12.2016
(73) Patentinhaber: Voith Patent GmbH, 89522 Heidenheim (DE)
(72) Erfinder: Kolshorn, Kay Uwe, 38304 Wolfenbüttel (DE); Steinkampf, Andy, 38835 Osterwieck (DE); Knaus, Eugen, 31228 Peine (DE)
(74) Vertreter: Rupprecht, Kay

(56) Entgegenhaltungen:
- EP-A1- 1 352 802
- CN-Y- 2 795 548
- DE-C1- 19 918 195
- US-A- 3 040 907
- US-A- 3 171 546

## Beschreibung

Die vorliegende Erfindung betrifft eine Zug-/Stoßeinrichtung, insbesondere für Mittelpufferkupplungen von spurgeführten Fahrzeugen, insbesondere Schienenfahrzeugen.

Zug-/Stoßeinrichtungen, insbesondere für Mittelpufferkupplungen von Schienenfahrzeugen, sind in der Eisenbahntechnik wohl bekannt. Sie dienen der Zug- und Druckaufnahme bei Lastwechseln von Zug- bzw. Stoßbetrieb insbesondere von längeren Schienenfahrzeugverbänden. Derartige Zug- und Stoßeinrichtungen werden seit Langem verwendet.

Beispielsweise ist aus der Druckschrift DE 363 03 60 A1 eine Zug-/ Stoßeinrichtung bekannt, bei welcher zwei Reibungsfedern mit Kraftgleichgewicht gegeneinander verspannt angeordnet sind. Eine der beiden Reibungsfedern dient zur Aufnahme von Zugkräften, während die andere der Reibungsfedern zur Aufnahme von Druckkräften bestimmt ist. Die eine Zugkräfte aufnehmende Reibungsfeder entspannt sich bei auftretenden Druckkräften in Druckrichtung. Umgekehrt entspannt sich die andere Druckkräfte aufnehmende Feder bei auftretenden Druckkräften in Zugrichtung.
DE 199 18 195 C1 wird als nächstliegender Stand der Technik angesehen und offenbart alle Merkmale im Oberbegriff des Anspruchs 1.

Ferner ist aus der Druckschrift DE 106 27 27 B eine Stoßeinrichtung für Schienenfahrzeuge bekannt. Die Stoßeinrichtung ist dabei in einem geschlossenen Gehäuse vorgesehen. Im Unterschied zu der aus der DE 363 03 60 A1 bekannten Lösung wird in der Druckschrift DE 106 27 27 B vorgeschlagen, keine Spiralfedern zu verwenden, sondern abwechselnd Gummipolster und Metallplatten einzusetzen, um die auftretenden Druckkräfte zu dämpfen. Der Nachteil der aus diesem Stand der Technik bekannten Lösung ist jedoch darin zu sehen, dass nur eine Anwendung im Stoßbetrieb sinnvoll ist.

Nachteilig bei der aus der DE 363 03 60 A1 bekannten Lösung ist insbesondere die Notwendigkeit von jeweils zwei unabhängigen Spiralfedern, welche die Zug-/ Stoßeinrichtung vergleichsweise lang und im Aufbau komplex machen. Weiterhin nachteilig sind die ungedämpften Anschläge der Spiralfedern an das Gehäuse, die starke Geräusche bei Lastwechsel erzeugen. Diese lauten Geräusche sind in modernen Personenschienenfahrzeugen nicht tolerierbar.

Vor dem Hintergrund dieser Problemstellung ist es eine Aufgabe der vorliegenden Erfindung, eine Zug-/Stoßeinrichtung der eingangs genannten Art anzugeben, bei der eine optimale Geräuschdämpfung bei Lastwechsel gewährleistet ist, und bei der insbesondere eine kompakte Bauform realisierbar ist.

Diese Aufgabe wird durch den Gegenstand des unabhängigen Patentanspruches 1 gelöst, wobei vorteilhafte Weiterbildungen der erfindungsgemäßen Lösung in den Unteransprüchen angegeben sind.

Demnach wird insbesondere eine Zug-/Stoßeinrichtung vorgeschlagen, welche ein Dämpfergehäuse, ein Kraftübertragungselement sowie ein Dämpfungsmechanismus aufweist. Das Dämpfergehäuse ist mit dem Wagenkasten des spurgeführten Fahrzeuges verbunden bzw. verbindbar, während das Kraftübertragungselement, welches zum bedarfsweisen Übertragen von Zug- oder Stoßkräften auf das Dämpfergehäuse dient, sowohl in Zugrichtung als auch in Stoßrichtung relativ zu dem Dämpfergehäuse bewegbar ist. Der Dämpfungsmechanismus der erfindungsgemäßen Zug-/Stoßeinrichtung ist zumindest bereichsweise in dem Dämpfergehäuse aufgenommen und ausgebildet, die Bewegung des Kraftübertragungselements relativ zu dem Dämpfergehäuse bei Zug-/Stoßkraftübertragung abzudämpfen.

Insbesondere ist bei vorteilhaften Realisierungen der erfindungsgemäßen Lösung vorgesehen, dass der Dämpfungsmechanismus ein Federsystem aufweist, welches ausgebildet ist, mittels Pneumatik und/oder Hydraulik die Funktion von Dämpfung und Federung sowohl bei Zugkraftübertragung als auch bei Stoßkraftübertragung zu leisten. Mit anderen Worten, im Unterschied zu den aus dem Stand der Technik bekannten und vorstehend erläuterten Lösungen kommen bei der erfindungsgemäßen Zug-/Stoßeinrichtung keine Spiralfedern zum Einsatz; vielmehr wird insbesondere auf ein hydropneumatisches Federungssystem zurückgegriffen, welches mittels Hydraulik und Pneumatik die Funktionen von Dämpfung und Federung leistet. Auf diese Weise kann nicht nur eine besonders kompakte Bauweise realisiert werden, sondern auch nahezu jedwede Geräuschentwicklung beim Dämpfen von Zug- und Stoßkräften vermieden werden.

In einer leicht zu realisierenden aber dennoch effektiven Weise der zuletzt genannten Ausführungsform weist das Federsystem eine Kolbenstangenanordnung und eine Zylinderanordnung auf, wobei die Kolbenstangenanordnung eine Kolben aufweist, welcher relativ zu der Zylinderanordnung bewegbar ist, um auf diese Weise den Kolben in einen Innenraum der Zylinderanordnung einfahren zu können bzw. den Kolben aus dem Innenraum der Zylinderanordnung ausfahren zu können. Demnach kommt bei dieser Ausführungsform für das Federsystem ein Aufbau zum Einsatz, welcher beispielsweise bei hydraulischen Stoßdämpfern, insbesondere bei hydraulischen Stoßdämpfern mit Ausgleichsvolumen, verwendet wird. Selbstverständlich ist es aber auch denkbar, das Federsystem andersartig zu gestalten.

Ein besonders kompakter Aufbau ist realisierbar, wenn das Federsystem derart in dem Dämpfungsmechanismus integriert ist, dass bei Stoßkraftübertragung der Kolben in den Innenraum der Zylinderanordnung einfährt, wobei der Dämpfungsmechanismus in diesem Zusammenhang derart ausgebildet ist, dass dabei die Einfahrbewegung abgedämpft wird.

Der erfindunsgemäße Dämpfungsmechanismus weist eine Kraftumlenkung auf, welche derart ausgebildet ist, dass bei Zugkraftübertragung der Kolben in den Innenraum der Zylinderanordnung einfährt, wobei erneut der Dämpfungsmechanismus ausgebildet ist, dabei die Einfahrbewegung abzudämpfen.

Das Abdämpfen der Einfahrbewegung des Kolbens in den Innenraum der Zylinderanordnung kann auf unterschiedliche Weise realisiert werden. Gemäß einem Aspekt der vorliegenden Erfindung ist vorgesehen, dass beim Einfahren des Kolbens in den Innenraum der Zylinderanordnung aus dem Innenraum der Zylinderanordnung eine Hydraulikflüssigkeit durch mindestens einen Drosselkanal oder dergleichen in ein Hydraulikflüssigkeitsreservoir (Ausgleichsvolumen) gedrückt wird.

Alternativ oder zusätzlich hierzu ist es aber auch denkbar, dass beim Einfahren des Kolbens in den Innenraum der Zylinderanordnung vorzugsweise in dem Innenraum der Zylinderanordnung oder gegebenenfalls in dem Hydraulikflüssigkeitsreservoir (Ausgleichsvolumen) ein vorzugsweise unter Druck stehendes Gasreservoir weiter komprimiert wird.

Selbstverständlich kommen zum Abdämpfen der Einfahrbewegung des Kolbens in den Innenraum der Zylinderanordnung aber auch andere Lösungen in Frage.

Wie bereits angedeutet, weist die erfindungsgemäße Zug-/Stoßeinrichtung gemäß vorteilhaften Ausführungsformen eine Kraftumlenkung auf, mit welcher bewirkt wird, dass nicht nur bei Stoßkraftübertragung, sondern auch bei Zugkraftübertragung der Kolben der Kolbenanordnung in den Innenraum der Zylinderanordnung einfährt, wobei dabei die Einfahrbewegung durch den Dämpfungsmechanismus entsprechend abgedämpft wird.

In einer besonders leicht zu realisierenden und kompakten aber dennoch effektiven Lösung der Kraftumlenkung weist diese eine Zughülse und eine Druckplatte auf. In diesem Zusammenhang ist es denkbar, dass die Zughülse derart mit der Zylinderanordnung verbunden ist, dass die Zughülse nur gemeinsam mit der Zylinderanordnung relativ zu dem Kolben der Kolbenanordnung bewegbar ist. Andererseits sollte dabei die Druckplatte derart mit dem Kolben der Kolbenanordnung verbunden sein, dass die Druckplatte nur gemeinsam mit dem Kolben relativ zu der Zylinderanordnung bewegbar ist.

Gemäß einer alternativen Realisierung der Kraftumlenkung ist vorgesehen, dass die Zughülse derart mit dem Kolben der Kolbenanordnung verbunden ist, dass die Zughülse nur gemeinsam mit dem Kolben relativ zu der Zylinderanordnung bewegbar ist, wobei die Druckplatte derart mit der Zylinderanordnung verbunden ist, dass die Druckplatte nur gemeinsam mit der Zylinderanordnung relativ zu dem Kolben der Kolbenanordnung bewegbar ist.

Beide Ausführungsformen betreffend die Kraftumlenkung haben gemeinsam, dass bei Stoßbeanspruchung Stoß- bzw. Druckkräfte über das Kraftübertragungselement in die Druckplatte eingeleitet werden, während bei Zugbeanspruchung Zugkräfte über das Kraftübertragungselement in die Zughülse eingeleitet werden.

Gemäß vorteilhaften Ausführungsformen der erfindungsgemäßen Lösung ist das Kraftübertragungselement als Kupplungsschaft ausgebildet, wobei an einem dem Dämpfergehäuse gegenüberliegenden Endbereich des Kupplungsschafts ein Kupplungskopf angeordnet ist.

Bei dieser Ausführungsform ist es insbesondere von Vorteil, wenn das Dämpfergehäuse in einer horizontalen Ebene verschwenkbar an einem Lagerbock des Schienenfahrzeuges angelenkt ist.

Nachfolgend wird unter Bezugnahme auf die beiliegenden Zeichnungen eine exemplarische Ausführungsform der erfindungsgemäßen Zug-/Stoßeinrichtung näher beschrieben.

Es zeigen:
- FIG. 1:: eine Schnittansicht einer ersten exemplarischen Ausführungsform der erfindungsgemäßen Zug-/Stoßeinrichtung im unbelasteten Zustand;
- FIG. 2:: eine Schnittansicht der exemplarischen Ausführungsform der erfindungsgemäßen Zug-/Stoßeinrichtung gemäß FIG. 1 bei Druckbeanspruchung;
- FIG. 3:: eine Schnittansicht der exemplarischen Ausführungsform der erfindungsgemäßen Zug-/Stoßeinrichtung gemäß FIG. 1 bei Zugbeanspruchung;
- FIG. 4:: eine isometrische Ansicht der exemplarischen Ausführungsform der erfindungsgemäßen Zug-/Stoßeinrichtung gemäß FIG. 1 im unbelasteten Zustand;
- FIG. 5:: eine Draufsicht auf eine zweite exemplarische Ausführungsform der erfindungsgemäßen Zug-/Stoßeinrichtung im unbelasteten Zustand; und
- FIG. 6:: eine Schnittansicht der exemplarischen Ausführungsform der erfindungsgemäßen Zug-/Stoßeinrichtung gemäß FIG. 5.

Bei den in den Zeichnungen exemplarisch dargestellten Ausführungsformen der erfindungsgemäßen Zug-/Stoßeinrichtung 1 handelt es sich um eine Zug-/Stoßsicherungsfunktion, da mit der Zug-/Stoßeinrichtung 1 Zug- und Druckkräfte, die von der Kupplungsstange (in den Zeichnungen nicht dargestellt) über die Zug-/Stoßeinrichtung 1 auf einen Wagenkasten bzw. Lagerbock (ebenfalls in den Zeichnungen nicht explizit dargestellt) übertragen werden, bis zu einer definierten Größe aufgenommen werden können, so dass die Kräfte abgedämpft beispielsweise über den Lagerbock in das Fahrzeuguntergestell weitergeleitet werden. Hierzu ist in der erfindungsgemäßen Zug-/Stoßeinrichtung 1 ein Dämpfungsmechanismus 2 integriert, welches zur (regenerativen) Absorption von Zug- und Stoß- bzw. Druckkräften vorgesehen ist.

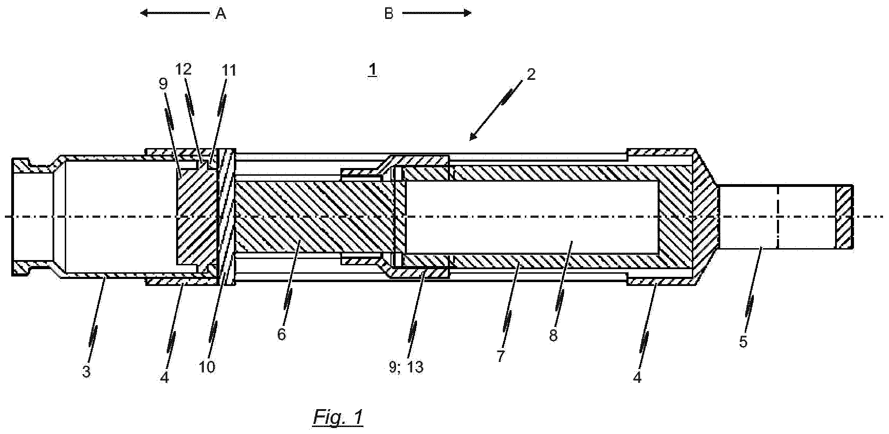

Im Einzelnen ist in FIG. 1 in einer Schnittansicht eine erste exemplarische Ausführungsform der erfindungsgemäßen Zug-/Stoßeinrichtung 1 im unbelasteten Zustand gezeigt. Die Zug-/Stoßeinrichtung 1 gemäß der Darstellung in FIG. 1 ist insbesondere als Kupplungsschaft einer Mittelpufferkupplung für spurgeführte Fahrzeuge, insbesondere Schienenfahrzeuge ausgebildet. Sie weist ein Kraftübertragungselement 3 auf, über welches die im Betrieb auftretenden Zug- oder Stoßkräfte auf den Dämpfungsmechanismus 2 weitergeleitet werden.

Des Weiteren weist die erfindungsgemäße Zug-/Stoßeinrichtung 1 ein Dämpfergehäuse 4 auf, welches insbesondere über einen Lagerbock oder dergleichen Anlenkung mit einem Wagenkasten eines Fahrzeuges verbindbar ist. Zu diesem Zweck ist an dem wagenkastenseitigen Endbereich des Dämpfergehäuses 4 beispielsweise ein entsprechendes Gelenkauge 5 ausgebildet. Selbstverständlich sind aber auch andere Mechanismen zum Anlenken des Dämpfergehäuses 4 an ein Untergestell eines Wagenkastens oder an einen Lagerbock möglich.

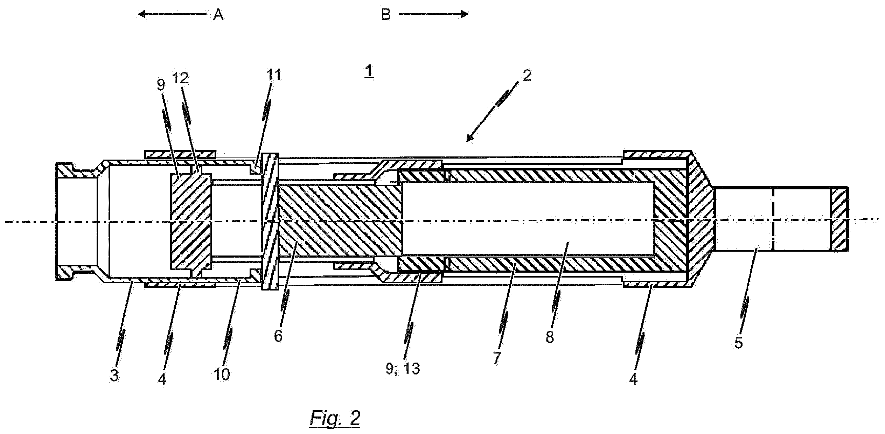

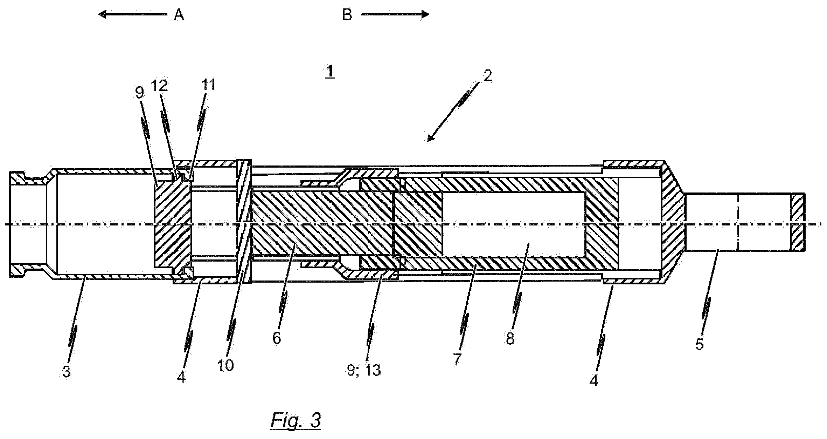

Das bereits erwähnte Kraftübertragungselement 3, welches zum bedarfsweisen Übertragen der im Betrieb auftretenden Zug- oder Druckkräfte auf den Dämpfungsmechanismus 2 bzw. das Dämpfergehäuse 4 dient, ist derart in Bezug auf das Dämpfergehäuse 4 angeordnet und ausgeführt, dass das Kraftübertragungselement 3 sowohl in Zugrichtung A als auch in Druckrichtung B relativ zu dem Dämpfergehäuse 4 bewegbar ist. Diese Bewegung des Kraftübertragungselements 3 relativ zu dem Dämpfergehäuse 4 ergibt sich insbesondere auch aus einem Vergleich der FIG. 1 mit den FIGs. 2 und 3, in denen die exemplarische Ausführungsform der erfindungsgemäßen Zug-/Stoßeinrichtung 1 im belasteten Zustand gezeigt ist.

Der Dämpfungsmechanismus 2, auf dessen Aufbau nachfolgend näher eingegangen wird, ist bei der exemplarischen Ausführungsform der erfindungsgemäßen Zug-/Stoßeinrichtung 1 zumindest bereichsweise in dem Dämpfergehäuse 4 aufgenommen und ausgebildet, die Bewegung des Kraftübertragungselements 3 relativ zu dem Dämpfergehäuse 4 bei Zug-/Druckkraftübertragung abzudämpfen.

Im Einzelnen, und wie in den Zeichnungen nur schematisch angedeutet, weist zu diesem Zweck der Dämpfungsmechanismus 2 ein Federsystem auf, welches insbesondere ausgebildet ist, mittels Pneumatik und/oder Hydraulik die Funktion von Dämpfung und Federung sowohl bei Zugkraftübertragung als auch bei Stoßkraftübertragung zu leisten.

So ist es beispielsweise denkbar, dass das Federsystem des Dämpfungsmechanismus 2 eine Kolbenstangenanordnung mit einem Kolben 6 und einer Zylinderanordnung 7 aufweist, wobei der Kolben 6 der Kolbenstangenanordnung relativ zu der Zylinderanordnung 7 bewegbar ist, um auf diese Weise den Kolben zumindest teilweise in einen Innenraum 8 der Zylinderanordnung 7 einfahren, bzw. den Kolben 6 zumindest teilweise aus dem Innenraum 8 der Zylinderanordnung 7 ausfahren zu können. Auch diese Relativbewegung des Kolbens 6 ergibt sich aus einem Vergleich der FIG. 2 und 3 mit der FIG. 1.

Wie es in diesem Zusammenhang der Darstellung in FIG. 2 entnommen werden kann, ist bei der exemplarischen Ausführungsform der erfindungsgemäßen Zug-/Stoßeinrichtung 1 das Federsystem derart in dem Dämpfungsmechanismus 2 integriert, dass bei Druckkraftübertragung der Kolben 6 in den Innenraum 8 der Zylinderanordnung 7 einfährt, wobei der Dämpfungsmechanismus 2 ausgebildet ist, dabei die Einfahrbewegung des Kolbens 6 entsprechend abzudämpfen. Andererseits, und wie es der Darstellung in FIG. 3 entnommen werden kann, fährt auch der Kolben 6 bei Zugkraftübertragung in den Innenraum 8 der Zylinderanordnung 7 ein, wobei erneut der Dämpfungsmechanismus die Einfahrbewegung des Kolbens 6 abdämpft.

Um diese Doppelfunktion realisieren zu können, ist bei der in den Zeichnungen dargestellten exemplarischen Ausführungsform der erfindungsgemäßen Zug-/Stoßeinrichtung 1 eine Kraftumlenkung vorgesehen. Diese Kraftumlenkung bewirkt, dass auch bei Zugkraftübertragung des Kolbens 6 in den Innenraum 8 der Zylinderanordnung 7 einfährt.

Bei der in den Zeichnungen exemplarischen Ausführungsform der erfindungsgemäßen Zug-/Stoßeinrichtung 1 weist die Kraftumlenkung eine Zughülse 9 und eine Druckplatte 10 auf. Die Zughülse 9 ist derart mit der Zylinderanordnung 7 verbunden, dass die Zughülse 9 nur gemeinsam mit der Zylinderanordnung 7 relativ zu dem Kolben 6 der Kolbenanordnung bewegbar ist. Andererseits ist bei der in den Zeichnungen dargestellten exemplarischen Ausführungsform der erfindungsgemäßen Zug-/Stoßeinrichtung 1 die Druckplatte 10 derart mit dem Kolben 6 der Kolbenanordnung verbunden, dass die Druckplatte 10 nur gemeinsam mit dem Kolben 6 relativ zu der Zylinderanordnung 7 bewegbar ist. Dieser Zusammenhang ergibt sich unmittelbar aus den Darstellungen in den FIG. 2 und 3.

Die bei der exemplarischen Ausführungsform der erfindungsgemäßen Zug-/Stoßeinrichtung 1 realisierte Kraftumlenkung bestehend aus der bereits genannten Zughülse 9 und der Druckplatte 10 ist insbesondere derart ausgebildet, dass bei Druckbeanspruchung (vgl. FIG. 2) Druckkräfte über das Kraftübertragungselement 3 in die Druckplatte 10 eingeleitet werden. Die Druckplatte 10 ist direkt mit dem Kolben 6 der Kolbenanordnung verbunden und überträgt somit die in die Druckplatte 10 eingeleiteten Druckkräfte auf den Kolben 6. Dies hat zur Folge, dass der Kolben 6 (zusammen mit dem Kraftübertragungselement 3 und der Druckplatte 10) relativ zu der Zylinderanordnung 7 in Richtung Wagenkasten (Druckrichtung B) bewegt wird. Bei dieser Relativbewegung fährt der Kolben 6 zumindest bereichsweise in den Innenraum 8 der Zylinderanordnung 7 ein und komprimiert ein in den Innenraum 8 beispielsweise vorhandenes Gas, so dass eine Abdämpfung der Bewegung des Kolbens 6 erfolgt.

Die von der Druckplatte 10 auf den Kolben 6 und somit in den Dämpfungsmechanismus 2 eingeleiteten Druckkräfte werden anschließend über das Dämpfergehäuse 4 auf den Wagenkasten bzw. Lagerbock weitergeleitet, mit welchem das Dämpfergehäuse 4 (beispielsweise über das Gelenkauge 5) verbunden ist.

Bei Zugbeanspruchung hingegen werden - wie es der Darstellung in FIG. 3 entnommen werden kann - Zugkräfte über das Kraftübertragungselement 3 in die Zughülse 9 eingeleitet. Im Einzelnen bewegt sich bei Zugbeanspruchung das Kraftübertragungselement 3 relativ zu dem Dämpfergehäuse 4 in Zugrichtung A. Bei dieser Relativbewegung werden die Zugkräfte über einen Anschlag 11 des Kraftübertragungselements 3 auf einen Gegenanschlag 12 der Zughülse 10 übertragen, infolgedessen die Zughülse 12 zusammen mit dem Kraftübertragungselement 3 relativ zu dem Dämpfergehäuse 4 in Zugrichtung A verschoben werden.

Andererseits ist der wagenkastenseitige Endbereich 13 der Zughülse 9 mit der Zylinderanordnung 7 derart verbunden, dass bei Zugbeanspruchung die Zylinderanordnung 7 gemeinsam mit der Zughülse 9 in Richtung Zugrichtung A verschoben werden, und zwar relativ zu der Druckplatte 10, dem Kolben 6 und dem Dämpfergehäuse 4. Diese Relativbewegung der Zughülse 9 zusammen mit der Zylinderanordnung 7 bewirken erneut, dass der Kolben 6 der Kolbenanordnung in den Innenraum 8 der Zylinderanordnung 7 einfährt, wobei - nach dem gleichen Mechanismus wie bei Druckbeanspruchung - erneut die Relativbewegung des Kolbens 6 entsprechend abgedämpft wird.

Wie in FIG. 3 dargestellt, entsteht durch die Bewegung der Zylinderanordnung 7 in Zugrichtung A zwischen der Zylinderanordnung 7 und dem wagenkastenseitigen Endbereich des Dämpfergehäuses 4 ein Freiraum 14. Dieser Freiraum 14 ist vorzugsweise mit der Außenatmosphäre strömungsmäßig verbunden und somit belüftet; denkbar ist allerdings auch, den Freiraum 14 nicht zu belüften, so dass dann ein entsprechendes Vakuum erzeugt wird, das jedoch die Dämpfung bei Zugbeanspruchung entsprechend vergrößern würde.

Zum Abdämpfen der Bewegung des Kolbens 6 beim Einfahren in den Innenraum 8 der Zylinderanordnung 7 kommen verschiedene Mechanismen in Frage. Bei der in den Zeichnungen exemplarisch dargestellten Ausführungsform wird beim Einfahren des Kolbens 6 in den Innenraum 8 der Zylinderanordnung 7 ein in dem Innenraum 8 der Zylinderanordnung 7 vorzugsweise unter Druck stehendes Gasreservoir weiter komprimiert.

Alternativ oder zusätzlich hierzu wäre es aber auch denkbar, wenn beim Einfahren des Kolbens 6 in den Innenraum 8 der Zylinderanordnung 7 aus dem Innenraum 8 der Zylinderanordnung 7 eine Hydraulikflüssigkeit durch mindestens einen Drosselkanal oder dergleichen in ein entsprechendes Hydraulikflüssigkeitsreservoir (Ausgleichsvolumen) gedrückt wird. Hierbei ist es insbesondere auch denkbar, dass dieses Hydraulikflüssigkeitsreservoir (Ausgleichsvolumen) mit einem unter hohem Druck (beispielsweise 30 bar) stehenden Gaspolster aus Stickstoff oder Luft versehen ist, um einen Ausgleich realisieren zu können.

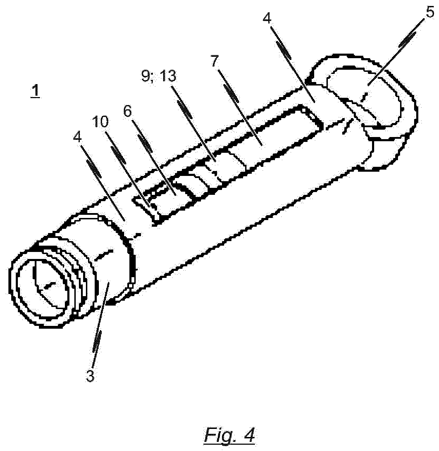

FIG. 4 zeigt - der Vollständigkeit halber - eine isometrische Ansicht der exemplarischen Ausführungsform der erfindungsgemäßen Zug-/Stoßeinrichtung gemäß FIG. 1 im unbelasteten Zustand.

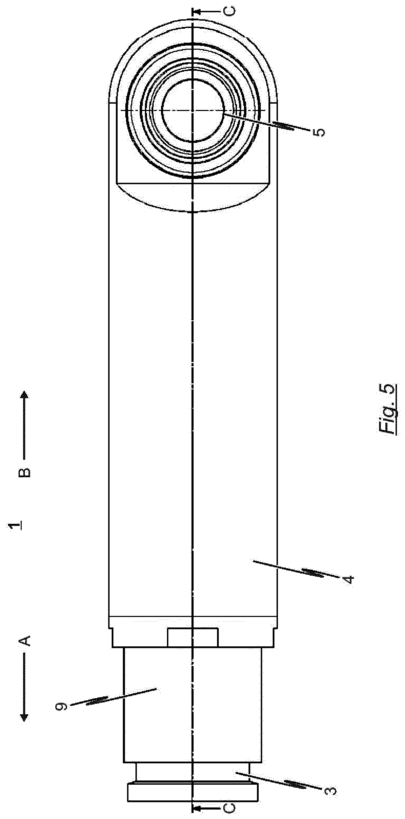

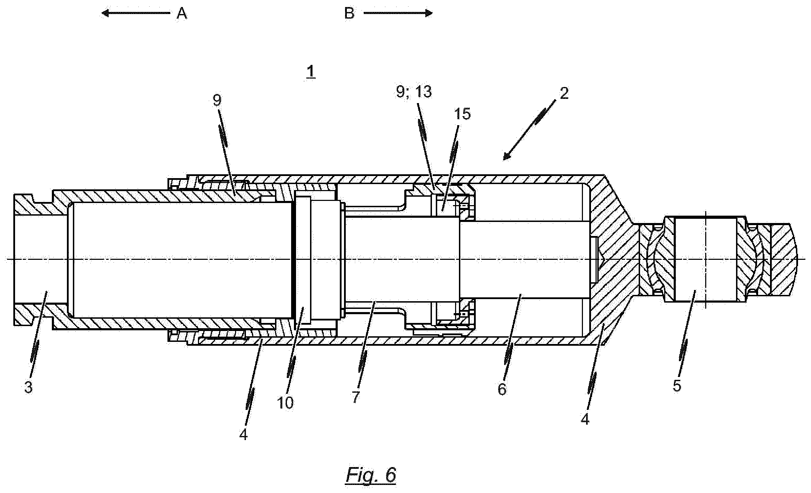

Nachfolgend wird unter Bezugnahme auf die Darstellungen in den Figuren 5 und 6 eine weitere (zweite) exemplarische Ausführungsform der erfindungsgemäßen Zug-/Stoßeinrichtung 1 beschrieben.

Wie auch die in FIG. 1 gezeigte erste Ausführungsform weist die beispielsweise in FIG. 6 gezeigte zweite exemplarische Ausführungsform der erfindungsgemäßen Zug-/Stoßeinrichtung 1 im Wesentlichen die folgenden Bauteile auf:
- ein Dämpfergehäuse 4, welches mit einem Wagenkasten des Fahrzeuges verbunden oder verbindbar ist;
- ein Kraftübertragungselement 3 zum bedarfsweisen Übertragen von Zug- oder Stoßkräften auf das Dämpfergehäuse 4, wobei das Kraftübertragungselement 3 sowohl in Zugrichtung A als auch in Stoßrichtung B relativ zu dem Dämpfergehäuse 4 bewegbar ist; und
- ein Dämpfungsmechanismus 2, der zumindest bereichsweise in dem Dämpfergehäuse 4 aufgenommen und ausgebildet ist, die Bewegung des Kraftübertragungselements relativ zu dem Dämpfergehäuse 4 bei Zug-/Stoßkraftübertragung abzudämpfen.

Der Dämpfungsmechanismus 2 der erfindungsgemäßen Zug-/Stoßeinrichtung 1 ist insbesondere ausgebildet, sowohl bei einer Zugkraftübertragung als auch bei einer Stoßkraftübertragung die jeweilig zu übertragenen Kräfte geeignet abzudämpfen. Hierzu weist der Dämpfungsmechanismus 2 ein Federsystem aufweist, welches ausgebildet ist, mittels Pneumatik und/oder Hydraulik die Funktion von Dämpfung und Federung sowohl bei Zugkraftübertragung als auch bei Stoßkraftübertragung zu leisten.

Bei der in FIG. 6 gezeigten (zweiten) exemplarischen Ausführungsform der erfindungsgemäßen Zug-/Stoßeinrichtung 1 weist das Federsystem einen teleskopartigen Aufbau mit einer Kolbenstangenanordnung und eine Zylinderanordnung 7 auf, wobei die Kolbenstangenanordnung einen Kolben 6 aufweist, welcher relativ zu der Zylinderanordnung 7 bewegbar ist zum zumindest teilweisen teleskopartigen Ein- und Ausfahren des Kolbens 6 in/aus der Zylinderanordnung 7.

Besonders zu betonen ist an dieser Stelle, dass auch bei der zweiten exemplarischen Ausführungsform der erfindungsgemäßen Zug-/Stoßeinrichtung 1 eine Kraftumlenkung zum Einsatz kommt, welche derart ausgebildet ist, dass auch bei einer Zugkraftübertragung der Kolben 6 in die Zylinderanordnung 7 einfährt, wobei dabei die Einfahrbewegung abgedämpft wird. Durch den in FIG. 6 angedeuteten Absatz 15 an der Zylinderanordnung 7 stützt sich bei Zugkraftübertragung eine Zughülse 9 ab, so dass die zu übertragene Zugkraft über diesen Absatz 15 geleitet wird. Dies ermöglicht insbesondere eine besonders einfache Gestaltung der Zughülse 9.

Im Übrigen entspricht in struktureller und funktioneller Hinsicht die zweite exemplarische Ausführungsform der erfindungsgemäßen Zug-/Stoßeinrichtung 1 im Wesentlichen der unter Bezugnahme auf die Figuren 1 bis 4 beschriebenen ersten exemplarischen Ausführungsform.

Die Erfindung ist nicht auf die in den Zeichnungen dargestellte exemplarische Ausführungsform der erfindungsgemäßen Zug-/Stoßeinrichtung 1 beschränkt, sondern ergibt sich aus einer Zusammenschau sämtlicher hierin offenbarter Merkmale.

### Bezugszeichenliste

- 1: Zug-/Stoßeinrichtung
- 2: Dämpfungsmechanismus
- 3: Kraftübertragungselement
- 4: Dämpfergehäuse
- 5: Gelenkauge
- 6: Kolben
- 7: Zylinderanordnung
- 8: Innenraum
- 9: Zughülse
- 10: Druckplatte
- 11: Anschlag (Kraftübertragungselement)
- 12: Gegenanschlag (Zughülse)
- 13: wagenkastenseitiger Endbereich der Zughülse
- 14: Freiraum
- 15: Ansatz
- A: Zugrichtung
- B: Druckrichtung

## Patentansprüche

1. Zug-/Stoßeinrichtung (1) für Mittelpufferkupplungen von spurgeführten Fahrzeugen, wobei die Zug-/Stoßeinrichtung (1) Folgendes aufweist:
- ein Dämpfergehäuse (4), welches mit einem Wagenkasten des Fahrzeuges verbunden oder verbindbar ist;
- ein Kraftübertragungselement (3) zum bedarfsweisen Übertragen von Zug- oder Stoßkräften auf das Dämpfergehäuse (4), wobei das Kraftübertragungselement (3) sowohl in Zugrichtung (A) als auch in Stoßrichtung (B) relativ zu dem Dämpfergehäuse (4) bewegbar ist; und
- ein Dämpfungsmechanismus (2), der zumindest bereichsweise in dem Dämpfergehäuse (4) aufgenommen und ausgebildet ist, die Bewegung des Kraftübertragungselements relativ zu dem Dämpfergehäuse (4) bei Zug-/Stoßkraftübertragung abzudämpfen,
wobei der Dämpfungsmechanismus (2) ein Federsystem aufweist, welches ausgebildet ist, nur mittels Pneumatik und/oder Hydraulik die Funktion von Dämpfung und Federung sowohl bei Zugkraftübertragung als auch bei Stoßkraftübertragung zu leisten, wobei das Federsystem eine Kolbenstangenanordnung und eine Zylinderanordnung (7) aufweist, wobei die Kolbenstangenanordnung einen Kolben (6) aufweist, welcher relativ zu der Zylinderanordnung (7) bewegbar ist zum zumindest teilweisen Ein- und Ausfahren des Kolbens (6) in/aus einem Innenraum (8) der Zylinderanordnung (7), und **dadurch gekennzeichnet, dass** der Dämpfungsmechanismus (2) eine Kraftumlenkung aufweist, welche derart ausgebildet ist, dass bei Zugkraftübertragung der Kolben (6) in den Innenraum (8) der Zylinderanordnung (7) einfährt, wobei dabei die Einfahrbewegung abgedämpft wird.

2. Zug-/Stoßeinrichtung (1) nach Anspruch 1, wobei das Federsystem derart in dem Dämpfungsmechanismus (2) integriert ist, dass bei Stoßkraftübertragung der Kolben (6) in den Innenraum (8) der Zylinderanordnung (7) einfährt, wobei dabei die Einfahrbewegung abgedämpft wird.

3. Zug-/Stoßeinrichtung (1) nach Anspruch 1 oder 2, wobei beim Einfahren des Kolbens (6) in den Innenraum (8) der Zylinderanordnung (7) aus dem Innenraum (8) der Zylinderanordnung (7) eine Hydraulikflüssigkeit durch mindestens einen Drosselkanal in ein Hydraulikflüssigkeitsreservoir gedrückt wird; und/oder wobei beim Einfahren des Kolbens (6) in den Innenraum (8) der Zylinderanordnung (7) vorzugsweise in dem Innenraum (8) der Zylinderanordnung (7) ein vorzugsweise unter Druck stehendes Gasreservoir weiter komprimiert wird.

4. Zug-/Stoßeinrichtung (1) nach einem der Ansprüche 1 bis 3, wobei die Kraftumlenkung eine Zughülse (9) und eine Druckplatte (10) aufweist, wobei die Zughülse (9) derart mit der Zylinderanordnung (7) verbunden ist, dass die Zughülse (9) nur gemeinsam mit der Zylinderanordnung (7) relativ zu dem Kolben (6) der Kolbenanordnung bewegbar ist, und wobei die Druckplatte (10) derart mit dem Kolben (6) der Kolbenanordnung verbunden ist, dass die Druckplatte (10) nur gemeinsam mit dem Kolben (6) relativ zu der Zylinderanordnung (7) bewegbar ist.

5. Zug-/Stoßeinrichtung (1) nach einem der Ansprüche 1 bis 3, wobei die Kraftumlenkung eine Zughülse (9) und eine Druckplatte (10) aufweist, wobei die Zughülse (9) derart mit dem Kolben (6) der Kolbenanordnung verbunden ist, dass die Zughülse (9) nur gemeinsam mit dem Kolben (6) relativ zu der Zylinderanordnung (7) bewegbar ist, und wobei die Druckplatte (10) derart mit dem Zylinderanordnung (7) verbunden ist, dass die Druckplatte (10) nur gemeinsam mit der Zylinderanordnung (7) relativ zu dem Kolben (6) der Kolbenanordnung bewegbar ist.

6. Zug-/Stoßeinrichtung (1) nach Anspruch 4 oder 5,
wobei die Kraftumlenkung derart ausgebildet ist, dass bei Stoß- bzw. Druckbeanspruchung Stoß- bzw. Druckkräfte über das Kraftübertragungselement (3) in die Druckplatte (10) eingeleitet werden, und das bei Zugbeanspruchung Zugkräfte über das Kraftübertragungselement (3) in die Zughülse (9) eingeleitet werden.

7. Zug-/Stoßeinrichtung (1) nach einem der Ansprüche 1 bis 6,
wobei insbesondere in dem Dämpfergehäuse (4) eine Begrenzung in Gestalt von mindestens einem Anschlag vorgesehen ist zum Begrenzen des maximal zulässigen Druck- und Zughubs.

8. Zug-/Stoßeinrichtung (1) nach einem der Ansprüche 1 bis 7,
wobei das Kraftübertragungselement (3) als Kupplungsschaft ausgebildet ist, wobei an einem dem Dämpfergehäuse (4) gegenüberliegenden Endbereich des Kupplungsschafts ein Kupplungskopf angeordnet ist.

9. Zug-/Stoßeinrichtung (1) nach einem Ansprüche 1 bis 8,
wobei das Dämpfergehäuse (4) in einer horizontalen Ebene schwenkbar an einem Lagerbock angelenkt ist.

10. Zug-/Stoßeinrichtung (1) nach einem der Ansprüche 1 bis 9,
wobei das Dämpfergehäuse (4) vollständig in dem Kupplungsschaft einer Mittelpufferkupplung integrierbar ist.

## Claims

1. A draw-and-buffer gear (1) for central buffer couplings of track-guided vehicles, wherein the draw-and-buffer gear (1) comprises the following:
- a damper housing (4) which is connected or connectable to a railcar body of the vehicle;
- a force transmission element (3) for transmitting tractive or impact forces to the damper housing (4) as needed, wherein the force transmission element (3) is movable relative to the damper housing (4) both in the direction of pull (A) as well as in the direction of impact (B); and
- a damping mechanism (2) at least partially accommodated in the damper housing (4) and designed to dampen the movement of the force transmission element relative to the damper housing (4) during the transmission of tractive/impact force,
wherein the damping mechanism (2) comprises a spring system designed to perform the damping and cushioning function by means of pneumatics and/or hydraulics when transmitting both tractive force as well as impact force,
wherein the spring system comprises a piston rod assembly and a cylinder arrangement (7), wherein the piston rod assembly comprises a piston (6) which is movable relative to the cylinder arrangement (7) to at least partially retract and extend the piston (6) in/out of an interior (8) of the cylinder arrangement (7), and
**characterized in that**
the damping mechanism (2) comprises a force deflection designed such that the piston (6) retracts into the interior (8) of the cylinder assembly (7) during the transmission of tractive force, wherein the retracting motion is thereby dampened.

2. The draw-and-buffer gear (1) according to claim 1,
wherein the spring system is integrated into the damping mechanism (2) such that the piston (6) retracts into the interior (8) of the cylinder assembly (7) during the transmission of impact force, wherein the retracting motion is thereby dampened.

3. The draw-and-buffer gear (1) according to claim 1 or 2,
wherein a hydraulic fluid is forced out of the interior (8) of the cylinder arrangement (7) through at least one throttle channel into a hydraulic fluid reservoir when the piston (6) is retracted into the interior (8) of the cylinder arrangement (7); and/or
wherein a preferably pressurized gas reservoir in the interior (8) of the cylinder arrangement (7) is preferably further compressed when the piston (6) is retracted into the interior (8) of the cylinder arrangement (7).

4. The draw-and-buffer gear (1) according to one of claims 1 to 3,
wherein the force deflection comprises a tension sleeve (9) and a pressure plate (10), wherein the tension sleeve (9) is connected to the cylinder arrangement (7) such that the tension sleeve (9) can only move relative to the piston (6) of the piston assembly together with the cylinder arrangement (7), and wherein the pressure plate (10) is connected to the piston (6) of the piston assembly such that the pressure plate (10) can only move relative to the cylinder arrangement (7) together with the piston (6).

5. The draw-and-buffer gear (1) according to one of claims 1 to 3,
wherein the force deflection comprises a tension sleeve (9) and a pressure plate (10), wherein the tension sleeve (9) is connected to the piston (6) of the piston assembly such that the tension sleeve (9) can only move relative to the cylinder arrangement (7) together with the piston (6), and wherein the pressure plate (10) is connected to the cylinder arrangement (7) such that the pressure plate (10) can only move relative to the piston (6) of the piston assembly together with the cylinder arrangement (7).

6. The draw-and-buffer gear (1) according to claim 4 or 5,
wherein the force deflection is designed such that impact and/or compressive forces are fed to the pressure plate (10) via the force transmission element (3) during impact or compressive loading, and that tractive forces are fed to the tension sleeve (9) via the force transmission element (3) during tensile loading.

7. The draw-and-buffer gear (1) according to one of claims 1 to 6,
wherein a restriction in the form of at least one limit stop is in particular provided in the damper housing (4) to limit the maximum allowable pressure and tension stroke.

8. The draw-and-buffer gear (1) according to one of claims 1 to 7,
wherein the force transmission element (3) is designed as a coupling shaft, wherein a coupler head is arranged at an end region of the coupling shaft situated opposite the damper housing (4).

9. The draw-and-buffer gear (1) according to one of claims 1 to 8,
wherein the damper housing (4) is articulated to a bearing bracket so as to be pivotable in a horizontal plane.

10. The draw-and-buffer gear (1) according to one of claims 1 to 9,
wherein the damper housing (4) is fully integrable into the coupling shaft of a central buffer coupling.

## Revendications

1. Dispositif de traction/poussée (1) pour des attelages à tampon central de véhicules sur rails, le dispositif de traction/poussée (1) comprenant :
- un boîtier amortisseur (4) qui est relié ou susceptible d'être relié à une caisse de wagon du véhicule ;
- un élément transmetteur de force (3) pour transmettre des forces de traction ou de poussée au boîtier amortisseur (4), selon les besoins, l'élément transmetteur de force (3) étant mobile par rapport au boîtier amortisseur (4) aussi bien en direction de traction (A) qu'en direction de poussée (B) ; et
- un mécanisme d'amortissement (2) qui est logé au moins localement dans le boîtier amortisseur (4) et qui est réalisé pour amortir le mouvement de l'élément transmetteur de force par rapport au boîtier amortisseur (4) lors de la transmission de forces de traction/poussée,
dans lequel
le mécanisme d'amortissement (2) comprend un système à ressort qui est réalisé pour assurer la fonction d'amortissement et de suspension uniquement par voie pneumatique et/ou hydraulique, aussi bien lors de la transmission de forces de traction que lors de la transmission de forces de poussée,
le système à ressort comprend un ensemble de tige de piston et un ensemble de cylindre (7), l'ensemble de tige de piston comprenant un piston (6) qui est mobile par rapport à l'ensemble de cylindre (7) pour rétracter et déployer au moins partiellement le piston (6) dans/hors d'un volume intérieur (8) de l'ensemble de cylindre (7),
**caractérisé en ce que**
le mécanisme d'amortissement (2) comprend un moyen de déviation de force qui est réalisé de telle sorte que lors d'une transmission de forces de traction, le piston (6) se rétracte dans le volume intérieur (8) de l'ensemble de cylindre (7), le mouvement de rétraction étant amorti.

2. Dispositif de traction/poussée (1) selon la revendication 1,
dans lequel le système à ressort est intégré dans le mécanisme d'amortissement (2) de telle sorte que lors de la transmission de forces de poussée, le piston (6) se rétracte dans le volume intérieur (8) de l'ensemble de cylindre (7), le mouvement de rétraction étant amorti.

3. Dispositif de traction/poussée (1) selon la revendication 1 ou 2,
dans lequel
lors de la rétraction du piston (6) dans le volume intérieur (8) de l'ensemble de cylindre (7), un liquide hydraulique est poussé hors du volume intérieur (8) de l'ensemble de cylindre (7) à travers au moins un canal d'étranglement jusque dans un réservoir à liquide hydraulique ; et/ou lors de la rétraction du piston (6) dans le volume intérieur (8) de l'ensemble de cylindre (7), un réservoir à gaz de préférence sous pression continue d'être comprimé de préférence dans le volume intérieur (8) de l'ensemble de cylindre (7).

4. Dispositif de traction/poussée (1) selon l'une des revendications 1 à 3, dans lequel
le moyen de déviation de force comprend une douille de traction (9) et une plaque de pression (10), la douille de traction (9) étant reliée à l'ensemble de cylindre (7) de telle sorte que la douille de traction (9) n'est mobile par rapport au piston (6) de l'ensemble de piston que conjointement avec l'ensemble de cylindre (7), et la plaque de pression (10) étant reliée au piston (6) de l'ensemble de piston de telle sorte que la plaque de pression (10) n'est mobile par rapport à l'ensemble de cylindre (7) que conjointement avec le piston (6).

5. Dispositif de traction/poussée (1) selon l'une des revendications 1 à 3, dans lequel
le moyen de déviation de force comprend une douille de traction (9) et une plaque de pression (10), la douille de traction (9) étant reliée au piston (6) de l'ensemble de piston de telle sorte que la douille de traction (9) n'est mobile par rapport à l'ensemble de cylindre (7) que conjointement avec le piston (6), et la plaque de pression (10) étant reliée à l'ensemble de cylindre (7) de telle sorte que la plaque de pression (10) n'est mobile par rapport au piston (6) que conjointement avec l'ensemble de cylindre (7).

6. Dispositif de traction/poussée (1) selon la revendication 4 ou 5,
dans lequel
le moyen de déviation de force est réalisé de telle sorte que lors d'une sollicitation en poussée ou en pression, des forces de poussée ou de pression sont appliquées à la plaque de pression (10) via l'élément transmetteur de force (3), et que lors d'une sollicitation en traction, des forces de traction sont appliquées à la douille de traction (9) via l'élément transmetteur de force (3).

7. Dispositif de traction/poussée (1) selon l'une des revendications 1 à 6, dans lequel
une limitation sous la forme d'au moins une butée est prévue en particulier dans le boîtier amortisseur (4), qui est destinée à limiter la course de pression et de traction maximale admissible.

8. Dispositif de traction/poussée (1) selon l'une des revendications 1 à 7, dans lequel
l'élément transmetteur de force (3) est réalisé sous forme de queue d'attelage, une tête d'attelage étant agencée sur une zone d'extrémité de la queue d'attelage, opposée au boîtier amortisseur (4).

9. Dispositif de traction/poussée (1) selon l'une des revendications 1 à 8, dans lequel
le boîtier amortisseur (4) est articulé en pivotement à un support formant palier dans un plan horizontal.

10. Dispositif de traction/poussée (1) selon l'une des revendications 1 à 9, dans lequel
le boîtier amortisseur (4) est intégrable complètement dans la queue d'attelage d'un attelage à tampon central.
